# EUROPEAN PATENT SPECIFICATION

(11) **EP 4 083 376 B1**
(45) Date of publication and mention of the grant of the patent: **28.08.2024**
(21) Application number: 22165907.1
(22) Date of filing: 31.03.2022
(51) Int. Cl.: F01D 5/00, F01D 21/00, G02B 23/00

(54) **TURBINE BLADE CREEP MONITORING**
KRIECHÜBERWACHUNG EINER TURBINENSCHAUFEL
SURVEILLANCE DE FLUAGE DE PALE DE TURBINE

(30) Priority: 29.04.2021 GB 202106108
(43) Date of publication of application: 02.11.2022
(73) Proprietor: Rolls-Royce plc, London N1 9FX (GB)
(72) Inventor: Pulisciano, Adriano, Derby, DE24 8BJ (GB); Nasser, Bilal M, Derby, DE24 8BJ (GB)
(74) Representative: Rolls-Royce plc

(56) References cited:
- JP-A- 2015 078 895
- US-A1- 2014 096 601
- US-A1- 2017 138 820
- US-A1- 2017 358 073
- US-A1- 2018 292 275

## Description

The present disclosure relates to a method and a system for monitoring turbine blade creep in a gas turbine engine.

Conventionally borescopes are used to view internal components within an assembled gas turbine engine to determine if the components within the engine are damaged and need repair or if they are undamaged and do not require repair. The use of borescopes enables the components to be viewed without having to disassemble the gas turbine engine into modules or sub modules.

The current approach for on-wing assessment of turbine blade creep is to use a borescope to visually estimate the radial growth of a blade with a borescope by observing the size of the gap between a shroud of the blade and a liner forming the outer wall of the working annulus of the engine.

This provides a qualitative measure of creep in the blade, but it is non-quantifiable, and results vary between operators. Metrical (i.e. quantitative) measurement is currently performed by stripping down the engine and precisely measuring the dimensions of the top of the blade using a coordinate measurement machine (CMM). This is time-consuming and expensive and can only be performed when the engine is in a maintenance facility with the necessary equipment. Turbine blades are currently used for a conservative number of operation cycles. More accurate determination of turbine blade creep allows for the turbine blades to be used for a longer duration, reducing operating costs.

US2017358073 relates to systems and methods for monitoring components. A component has an exterior surface. A method includes performing a first analysis of a first image of a surface feature configured on the exterior surface of the component, the first image obtained by an imaging device. The method further includes adjusting a viewing parameter of the imaging device when a predetermined first analysis threshold for the first image is unsatisfied, and performing a subsequent first analysis of a second image of the surface feature, the second image obtained by the imaging device. The method further includes adjusting a distance between the imaging device and the surface feature when the predetermined first analysis threshold for the second image is unsatisfied, and performing a second analysis of a third image, the third image obtained by the imaging device.

US2017138820 relates to systems and methods for monitoring components. A component has an exterior surface and a surface feature configured on the component. A system includes a data acquisition device for analyzing the surface feature. The system further includes an alignment assembly for aligning the data acquisition device and the surface feature. The alignment assembly includes a target feature configurable on the component and a guide feature configured with the data acquisition device. Alignment of the guide feature with the target feature aligns the data acquisition device and the surface feature.

Accordingly, current approaches to creep measurement lack consistency, are inefficient, and do not generally provide enough quantitative data to understand creep growth in different cycling stages and on different parts of the blade. As a result, turbine blades may be replaced unnecessarily early in their life cycle, adding substantially to engine running costs.

According to a first aspect there is provided a method as claimed in claim 1.

The present disclosure is at least partly based on a realisation that a measurement distance derived from a borescope image can be sufficiently repeatable and accurate to reliably monitor creep-induced lengthening of the blade. Moreover, the method can be performed on-wing and without stripping down the engine. Thus, it facilitates consistent and relatively frequent measurements from which creep growth in different cycling stages and on different parts of the blade can be understood.

Optional features of the method of the first aspect will now be set out. These are applicable singly or in any combination.

The measurement on the image of the distance between the radially inner and radially outer landmarks on the turbine blade may include: identifying on the image, or a corresponding image, a feature of the turbine blade having a known size; determining a distance conversion scale using the known size of the identified feature; and using the conversion scale to determine the distance between the radially inner and radially outer landmarks. For example, the feature can be a spacing of known distance between two air film cooling holes formed in the blade. As another example, the feature can be a superficial marking or discolouration blemish of known size.

The borescope may be a conventional borescope or a stereo borescope which is used to obtain left and right images, the measuring being performed for each of the left and right images. This can improve the accuracy of and increase the confidence in the determination of creep-induced lengthening.

Indeed, more generally, the measuring may be performed plural times for different images of the blade (e.g. left and right images and/or different stills of a video of the turbine blade as the row of turbine blades rotates). The measurements can then provide an average measured distance for comparison with the reference distance.

The reference distance may be the distance between the radially inner and radially outer landmarks for a turbine blade which has not experienced creep. For example, this reference distance may be determined by measuring an actual blade or by extracting the distance information from a 3D model (e.g. a CAD model or a scan data model) of the blade.

The measuring may include performing automated image analysis to extract edge lines of the turbine blade from the image. For example, the extracted lines can be the trailing edge line, one or more platform edge lines and/or one or more shroud edge lines from the image. This can facilitate the measurement of the distance between the radially inner and radially outer landmarks, and can help to remove a source of operator variation. The image analysis may perform image filtering as a precursor to extracting the edge lines of the blade.

The receiving, measuring and comparing may be performed for each of successive turbine blades of the row of turbine blades. In particular the method can be used to monitor all the turbine blades of the row for creep.

The method may further include: calibrating the borescope to determine imaging distortions produced thereby; and using the calibration to adjust the image to remove or reduce imaging distortions before the measurement on the image of the distance between radially inner and radially outer landmarks on the turbine blade.

The method may further include, preliminary to receiving the image of a turbine blade: locating the borescope in the engine adjacent the row of turbine blades; and using the borescope to obtain the image of the turbine blade of the row of turbine blades.

Locating the borescope in the engine may comprise inserting the borescope into a port on an accessible part of the engine. Guiding the borescope through a guide tunnel until the end of the borescope is at the end of the guide tunnel. The borescope and/or guide tube may be shaped or comprise fitments to improve the reproducibility of positioning the borescope.

The borescope may be used to obtain a video of the turbine blade as the row of turbine blades rotates, the image being a still image extracted from the video.

According to a second aspect there is provided a system as claimed in claim 9.

Thus, the system of the second aspect corresponds to the method of the first aspect.

Optional features of the method of the first aspect pertain also to the system of the second aspect.

The measurement on the image of the distance between radially inner and radially outer landmarks on the turbine blade performed by the automated image analysis may include: identifying on the image, or a corresponding image, a feature of the turbine blade having a known size; determining a distance conversion scale using the known size of the identified feature; and using the conversion scale to determine the distance between the radially inner and radially outer landmarks.

The borescope may be a stereo borescope which is used to obtain left and right images, the measuring and comparing being performed for each of the left and right images.

The reference distance may be the distance between the radially inner and radially outer landmarks for a turbine blade which has not experienced creep.

The processor-based sub-system may be further adapted to extract edge lines of the turbine blade from the image, e.g. as a precursor to measuring the distance between the radially inner and radially outer landmarks. The processor-based sub-system may be further adapted to perform image filtering as a precursor to extracting the edge lines.

The processor-based sub-system may be further adapted to: calibrate the borescope to determine imaging distortions produced thereby; and use the calibration to adjust the image to remove or reduce imaging distortions before performing the automated image analysis.

The system may further include a borescope adapted to be located in the engine adjacent the row of turbine blades for obtaining the image of the turbine blade of the row of turbine blades, the computer readable medium being operatively connectable to the borescope to receive therefrom the image of the turbine blade.

The borescope may be adapted to obtain a video of the turbine blade as the row of turbine blades rotates, the image being a still image extracted from the video.

The method of the first aspect is typically computer-implemented. Accordingly, further aspects of the disclosure provide: a computer program comprising code which, when the code is executed on a computer, causes the computer to perform the method of the first aspect; and a computer readable medium storing a computer program comprising code which, when the code is executed on a computer, causes the computer to perform the method of the first aspect.

Embodiments will now be described by way of example only, with reference to the Figures, in which:
Figure 1 shows a longitudinal cross-section through a ducted fan gas turbine engine;
Figure 2 shows an image of a turbine blade obtained by a borescope; and
Figure 3 shows a flow chart of stages in a procedure for monitoring a blade for creep-induced deformation.
Figure 4 shows a schematic representation of a system in accordance with an aspect of the invention.

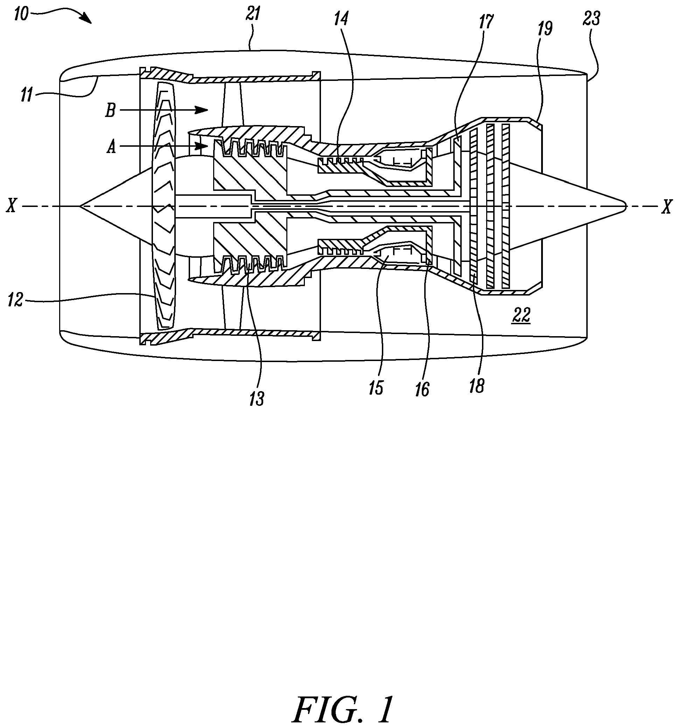

With reference to Figure 1, a ducted fan gas turbine engine is generally indicated at 10 and has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

During operation, air entering the intake 11 is accelerated by the fan 12 to produce two air flows: a first air flow A into the intermediate-pressure compressor 13 and a second air flow B which passes through the bypass duct 22 to provide propulsive thrust. The intermediate-pressure compressor 13 compresses the air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate-pressure compressors 14, 13 and the fan 12 by suitable interconnecting shafts.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

The turbine blades of the turbines 16, 17, 18, which are exposed to high centrifugal forces and high temperatures from the working gas expanding through the turbines, are vulnerable to creep deformation. Accordingly, regular inspection of the blades is performed using a borescope to monitor for creep-induced deformation.

Preliminary to the inspection, the borescope can be calibrated to determine any imaging distortions which it produces. Various calibration procedures are known to the skilled person, such as described for example by Zhengyou Zhang, *A Flexible New Technique for Camera Calibration,* Technical Report MSR-TR-98-71, https://www.microsoft.com/en-us/research/wp-content/uploads/2016/02/tr98-71.pdf. The calibration can then be used to adjust images obtained by the borescope to remove or reduce imaging distortions.

The borescope is located adjacent a row of blades to obtain an image of part of the row. The row is then rotated so that each blade in turn is moved into position to be imaged by the borescope. This can be achieved by indexing the rotational position of the row, or more conveniently by using the borescope to obtain a video of the row as it continuously rotates. Respective stills can then be extracted from the video for the blades, each still corresponding to its blade being in a given position relative to the borescope.

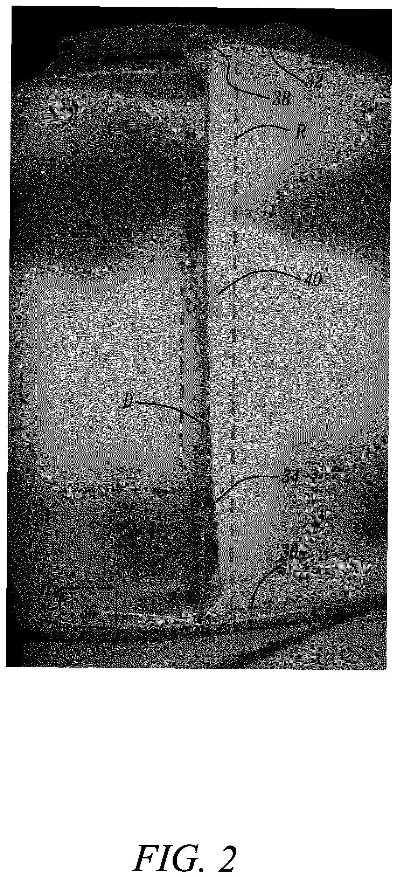

Figure 2 shows one such still for a blade. Borescopes conventionally have distance measuring capability. This can be used directly to measure distances on the image. However, particularly for larger scale measurements beyond the normal measuring range of borescopes, better accuracies can be obtained by determining a distance conversion scale, for example in pixels/mm, based on features of known size. For example, the spacings between air film cooling holes formed in the blade are generally known to high accuracy and can be used to determine such a scale. Another option is to measure the length of a superficial marking or discolouration blemish of known size (as determined e.g. by a coordinate measuring machine), such as marking 40 at the trailing edge 34 of the blade shown in Figure 2, and using that to determine the scale.

The scale determined for the image of one blade, can be applied without loss of significant accuracy to corresponding images of other blades.

Having extracted the relevant stills and saved them into suitable memory, a processor-based image analyser performs edge detection on each image. For example, the image analyser may perform image filtering (e.g. noising filtering, texture filtering, compression-less filtering etc.) to enhance the images. The image analyser may, for example, perform canny edge detection to identify edge in the image, the image analyser may then perform a Hough transformation to reject unwanted lines. Typically, edges corresponding to the trailing edge of the blade 34, an edge 30 of the platform of the blade, and an edge 32 of the shroud of the blade are then detected by the image analyser (e.g. using template matching, edge detection, textural analysis etc.) and the lines of these edges extracted.

The image analyser may ensure that the trailing edge 34 is in a defined region of interest (rectangle R in Figure 2), whereby the image analyser can confirm that the blade is appropriately positioned relative to the borescope prior to distance measurement. This may further improve accuracy of edge detection by further improving reproducibility of lighting of the turbine blade.

The image analyser then identifies two landmarks. These are indicated on Figure 2 as a radially inner landmark 36 which is the corner of the platform edge 30 closest to the trailing edge 34, and a radially outer landmark 38 which is the corner of the shroud edge 32 closest to the trailing edge 34. The distance D between these two landmarks is determined either by applying a conversion scale to convert from pixels to actual distance. The conversion scale may be determined by direct measurement by the borescope, or indirectly by measuring a known distance between two features on the borescope images e.g. between two cooling holes. Accurate measurement between two visible features (e.g. cooling holes, surface defects) may be made by the borescope at a position close to the turbine blade. The conversion may be applied to the distance D between the two landmarks which is taken at a larger field of view.

The image analyser compares the measured distance D with a reference distance to determine an amount of creep-induced lengthening of the blade. The reference distance is typically the corresponding distance for a turbine blade which has not experienced creep. This can be obtained by measuring an actual blade, or by extracting the distance information from a 3D model of the blade.

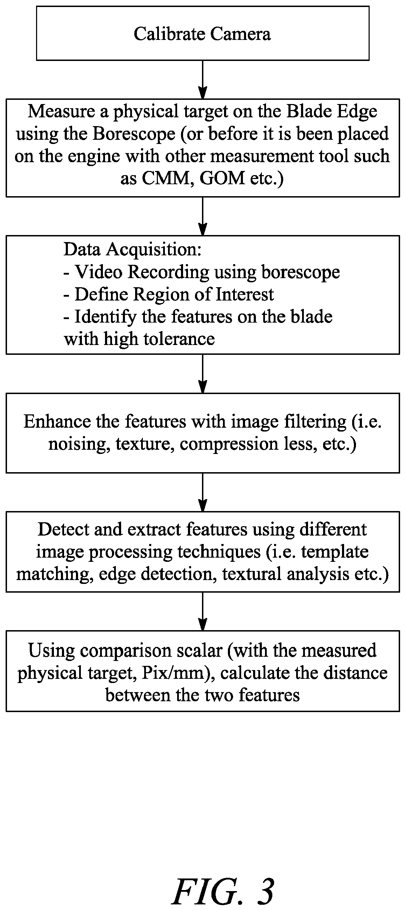

Figure 3 summarises stages of the creep monitoring procedure.

Advantageously, because the measurement of distance can be over the whole radial length of the blade, the accuracy of the measurement is improved. That is, any measurement of change in length due to creep is increased relative to approaches which do not use the whole length.

If the borescope is a stereo borescope, simultaneous left and right images can be obtained of each blade to double the number of distance measurements from each still. Table 1 below shows example distance measurement results for left and right images of a blade obtained using a stereo borescope for six successive stills with the blade changing position slightly (due to rotation) between each still.

**Table 1**

| | Left | Right |
|---|---|---|
| Still 1 | 61.0 mm | 61.1 mm |
| Still 2 | 61.2 mm | 60.7 mm |
| Still 3 | 60.9 mm | 60.9 mm |
| Still 4 | 61.1 mm | 61.2 mm |
| Still 5 | 60.9 mm | 61.0 mm |
| Still 6 | 60.9 mm | - |

An average of the measurements may be determined for comparison with the reference distance. In addition, using left and right stereo images provides a useful check on edge detection and landmark identification. In still 6, for example, no distance measurement was made for the right image because the image analyser was unable to extract and identify one or both of the landmarks.

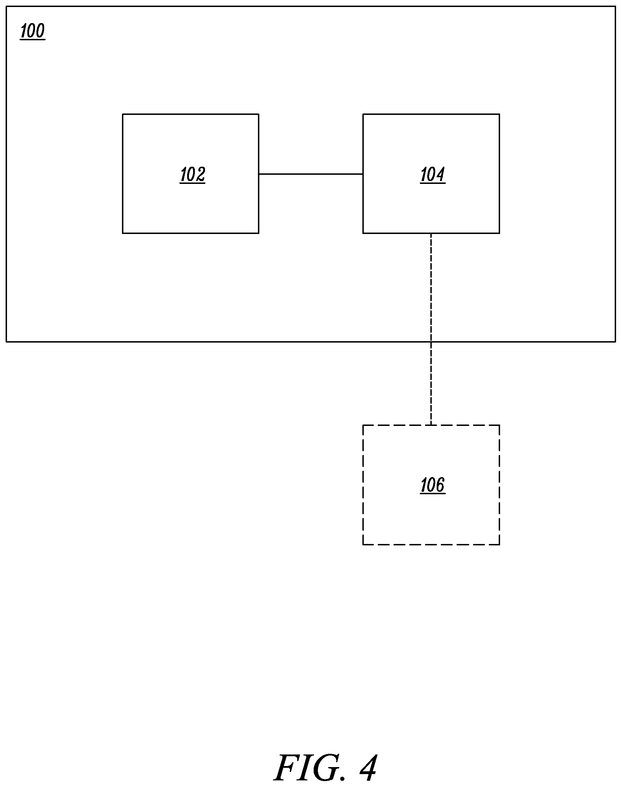

Figure 4 shows a system 100 according to an aspect. The system 100 comprises a computer readable storage medium 104 for storing I.A. stereo images received from a borescope 106. The system 100 also comprises a processor-based sub-system 102. The processor-based sub-system 102 is operationally connected to the computer readable storage medium. The operational connection between the processor-based sub-system 102 and the computer readable storage medium 104 may enable the processor-based sub-system to access images or video stored on the computer readable storage medium 104 and optionally a 3D reference model stored on the computer readable storage medium. The processor-based sub-system 102 may be adapted to perform the methods disclosed herein.

The processor-based sub-system 102 may be adapted to receive an image of a turbine blade of a row of turbine blades, the image having been obtained using a borescope located in the engine adjacent a row of turbine blades. The processor-based sub-system 102 may measure on the image a distance (D) between radially inner and radially outer landmarks (36, 38) on the turbine blade; and may compare the measured distance with a reference distance to determine an amount of creep-induced lengthening of the blade.

In embodiments, the system may comprise a borescope 106 shown in figure 4 in a dashed line. The computer readable medium may be operatively connected to the borescope to receive the images and/or video of the turbine blade from the borescope 106. In some embodiments control of the borescope 106 may be performed by the processor-based sub-system 102. The borescope 106 may be adapted to be located in the engine adjacent the row of turbine blades for obtaining the images and/or video of the turbine blade of the row of turbine blades. In embodiments, the video of the turbine blade may be captured as a row of turbine blades rotates. The processor-based sub-system 102 may be adapted to extract and analyse still images from the video stored on the computer readable storage medium 104.

The processor-based sub-system 102 may be adapted to extract edge lines (30, 32, 34) of the turbine blade from the image as a precursor to measuring the distance between the radially inner and radially outer landmarks.

The processor-based sub-system 102 may be adapted to identify landmarks on the turbine blade wherein the landmarks are respectively on a platform and a shroud of the turbine blade.

The processor-based sub-system 102 may be adapted to identify on an image, or a corresponding image, a feature (40) of the turbine blade having a known size; and to determine therefrom a distance conversion scale; and using the conversion scale to determine the distance between the radially inner and radially outer landmarks.

The processor-based sub-system 102 may be adapted to calibrate the borescope to determine imaging distortions produced thereby; and to use the calibration to adjust an image to remove or reduce imaging distortions before the measurement on the image of the distance between radially inner and radially outer landmarks on the turbine blade.

Embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be rearranged. A process is terminated when its operations are completed but could have additional steps not included in the figure. A process may correspond to a method, a function, a procedure, a subroutine, a subprogram, etc. When a process corresponds to a function, its termination corresponds to a return of the function to the calling function or the main function.

The term "computer readable medium" may represent one or more devices for storing data, including read only memory (ROM), random access memory (RAM), magnetic RAM, core memory, magnetic disk storage mediums, optical storage mediums, flash memory devices and/or other machine-readable mediums for storing information. The term "computer-readable medium" includes but is not limited to portable or fixed storage devices, optical storage devices, wireless channels and various other mediums capable of storing, containing or carrying instruction(s) and/or data.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a computer readable medium. One or more processors may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

It will be understood that the invention is limited to the appended claims.

All references cited herein are incorporated by reference.

## Claims

1. A method of monitoring turbine blade creep in a gas turbine engine, the method including:
receiving an image of a turbine blade of a row of turbine blades, the image having been obtained using a borescope located in the engine adjacent a row of turbine blades;
measuring on the image a distance (D) between radially inner and radially outer landmarks (36, 38) on the turbine blade; and
comparing the measured distance with a reference distance to determine an amount of creep-induced lengthening of the blade, **characterized in that**, the landmarks are respectively on a platform and a shroud of the turbine blade, and wherein each landmark is a corner of the respective platform or shroud closest the trailing edge (34) of the blade.

2. The method according to claim 1, wherein the measurement on the image of the distance between radially inner and radially outer landmarks on the turbine blade includes:
identifying on the image a feature (40) of the turbine blade having a known size;
determining a distance conversion scale using the known size of the identified feature (40); and
using the conversion scale to determine the distance between the radially inner and radially outer landmarks.

3. The method according to claim 1 or 2, wherein the reference distance is the nominal distance between the radially inner and radially outer landmarks for a turbine blade which has not experienced creep.

4. The method according to any one of the previous claims, wherein the measuring includes performing automated image analysis to extract edge lines (30, 32, 34) of the turbine blade from the image.

5. The method according to any one of the previous claims, wherein the receiving, measuring and comparing are performed for each of successive turbine blades of the row of turbine blades.

6. The method according to any one of the previous claims, further including:
calibrating the borescope to determine imaging distortions produced thereby; and
using the calibration to adjust the image to remove or reduce imaging distortions before the measurement on the image of the distance between radially inner and radially outer landmarks on the turbine blade.

7. The method according to any one of the previous claims, further including, preliminary to receiving the image of a turbine blade:
locating the borescope in the engine adjacent the row of turbine blades; and
using the borescope to obtain the image of the turbine blade of the row of turbine blades.

8. The method according to any one of the previous claims, wherein the borescope is used to obtain a video of the turbine blade as the row of turbine blades rotates, the image being a still image extracted from the video.

9. A system for monitoring turbine blade creep in a gas turbine engine, the system including:
a computer readable medium for storing an image of a turbine blade of a row of turbine blades, the image having been obtained using a borescope located in the engine adjacent the row of turbine blades; and
a processor-based sub-system operationally connected to the computer readable medium and adapted to:
perform automated image analysis to measure a distance (D) between radially inner and radially outer landmarks (36, 38) on the blade; and
compare the measured distance with a reference distance to determine an amount of creep-induced lengthening of the blade, **characterized in that**, the landmarks are respectively on a platform and a shroud of the turbine blade, and wherein each landmark is a corner of the respective platform or shroud closest the trailing edge (34) of the blade.

10. The system according to claim 9, wherein the measurement on the image of the distance between radially inner and radially outer landmarks on the turbine blade performed by the automated image analysis includes:
identifying on the image a feature (40) of the turbine blade having a known size;
determining a distance conversion scale using the known size of the identified feature (40); and
using the conversion scale to determine the distance between the radially inner and radially outer landmarks.

11. The system according to claim 9 or 10, wherein the processor-based sub-system is further adapted to extract edge lines (30, 32, 34) of the turbine blade from the image as a precursor to measuring the distance between the radially inner and radially outer landmarks.

12. The system according to any one of claims 9 to 11, further including a borescope adapted to be located in the engine adjacent the row of turbine blades for obtaining the image of the turbine blade of the row of turbine blades, the computer readable medium being operatively connectable to the borescope to receive therefrom the image of the turbine blade.

13. The system according to any one of claims 9 to 12, wherein the borescope is adapted to obtain a video of the turbine blade as the row of turbine blades rotates, the image being a still image extracted from the video.

## Patentansprüche

1. Verfahren zum Überwachen eines Kriechens einer Turbinenschaufel in einem Gasturbinentriebwerk, wobei das Verfahren Folgendes beinhaltet:
Empfangen eines Bildes einer Turbinenschaufel einer Reihe von Turbinenschaufeln, wobei das Bild unter Verwendung eines Endoskops erhalten wurde, das in dem Triebwerk benachbart zu einer Reihe von Turbinenschaufeln lokalisiert ist;
Messen einer Entfernung (D) zwischen einem radial inneren und radial äußeren Orientierungspunkt (36, 38) an der Turbinenschaufel auf dem Bild; und
Vergleichen der gemessenen Entfernung mit einer Referenzentfernung, um den Betrag der durch Kriechen verursachten Verlängerung der Schaufel zu bestimmen, **dadurch gekennzeichnet, dass** sich die Orientierungspunkte jeweils auf einer Plattform und einer Abdeckung der Turbinenschaufel befinden, und wobei jeder Orientierungspunkt eine Ecke der jeweiligen Plattform oder Abdeckung ist, die der Hinterkante (34) der Schaufel am nächsten liegt.

2. Verfahren nach Anspruch 1, wobei die Messung der Entfernung zwischen dem radial inneren und radial äußeren Orientierungspunkt an der Turbinenschaufel auf dem Bild Folgendes beinhaltet: Identifizieren eines Merkmals (40) der Turbinenschaufel, das eine bekannte Größe aufweist, auf dem Bild; Bestimmen eines Entfernungsumrechnungsmaßstabs unter Verwendung der bekannten Größe des identifizierten Merkmals (40); und
Verwenden des Umrechnungsmaßstabs, um die Entfernung zwischen dem radial inneren und radial äußeren Orientierungspunkt zu bestimmen.

3. Verfahren nach Anspruch 1 oder 2, wobei die Referenzentfernung die Nennentfernung zwischen dem radial inneren und radial äußeren Orientierungspunkt für eine Turbinenschaufel ist, bei der kein Kriechen aufgetreten ist.

4. Verfahren nach einem der vorhergehenden Ansprüche, wobei das Messen Durchführen einer automatisierten Bildanalyse beinhaltet, um Kantenlinien (30, 32, 34) der Turbinenschaufel aus dem Bild zu extrahieren.

5. Verfahren nach einem der vorhergehenden Ansprüche, wobei das Empfangen, Messen und Vergleichen für jede aufeinanderfolgende Turbinenschaufel der Reihe von Turbinenschaufeln durchgeführt wird.

6. Verfahren nach einem der vorhergehenden Ansprüche, ferner beinhaltend: Kalibrieren des Endoskops, um dadurch erzeugte Bildverzerrungen zu bestimmen; und Verwenden der Kalibrierung, um das Bild einzustellen, um Bildverzerrungen zu entfernen oder zu verringern, vor der Messung der Entfernung zwischen dem radial inneren und radial äußeren Orientierungspunkt an der Turbinenschaufel auf dem Bild.

7. Verfahren nach einem der vorhergehenden Ansprüche, ferner beinhaltend, als Vorstufe zu dem Empfangen des Bildes einer Turbinenschaufel:
Lokalisieren des Endoskops in dem Triebwerk benachbart zu der Reihe von Turbinenschaufeln; und Verwenden des Endoskops, um das Bild der Turbinenschaufel von der Reihe von Turbinenschaufeln zu erhalten.

8. Verfahren nach einem der vorhergehenden Ansprüche, wobei das Endoskop verwendet wird, um ein Video der Turbinenschaufel zu erhalten, während sich die Reihe von Turbinenschaufeln dreht, wobei das Bild ein aus dem Video extrahiertes Standbild ist.

9. System zum Überwachen eines Kriechens einer Turbinenschaufel in einem Gasturbinentriebwerk, wobei das System Folgendes beinhaltet:
ein computerlesbares Medium zum Speichern eines Bildes einer Turbinenschaufel einer Reihe von Turbinenschaufeln, wobei das Bild unter Verwendung eines Endoskops erhalten wurde, das sich in dem Triebwerk benachbart zu der Reihe von Turbinenschaufeln befindet; und
ein prozessorbasiertes Teilsystem, das funktionell mit dem computerlesbaren Medium verbunden und zu Folgendem angepasst ist:
Durchführen einer automatisierten Bildanalyse, um eine Entfernung (D) zwischen einem radial inneren und radial äußeren Orientierungspunkt (36, 38) an der Schaufel zu messen; und
Vergleichen der gemessenen Entfernung mit einer Referenzentfernung, um einen Betrag der durch Kriechen verursachten Verlängerung der Schaufel zu bestimmen, **dadurch gekennzeichnet, dass** sich die Orientierungspunkte jeweils auf einer Plattform und einer Abdeckung der Turbinenschaufel befinden, und wobei jeder Orientierungspunkt eine Ecke der jeweiligen Plattform oder Abdeckung ist, die der Hinterkante (34) der Schaufel am nächsten liegt.

10. System nach Anspruch 9, wobei die Messung der Entfernung zwischen dem radial inneren und radial äußeren Orientierungspunkt an der Turbinenschaufel auf dem Bild, die durch die automatisierte Bildanalyse durchgeführt wird, Folgendes beinhaltet:
Identifizieren eines Merkmals (40) der Turbinenschaufel, das eine bekannte Größe aufweist, auf dem Bild;
Bestimmen eines Entfernungsumrechnungsmaßstabs unter Verwendung der bekannten Größe des identifizierten Merkmals (40); und
Verwenden des Umrechnungsmaßstabs, um die Entfernung zwischen dem radial inneren und radial äußeren Orientierungspunkt zu bestimmen.

11. System nach Anspruch 9 oder 10, wobei das prozessorbasierte Teilsystem ferner dazu angepasst ist, als Vorläufer der Messung der Entfernung zwischen dem radial inneren und radial äußeren Orientierungspunkt Kantenlinien (30, 32, 34) der Turbinenschaufel aus dem Bild zu extrahieren.

12. System nach einem der Ansprüche 9 bis 11, ferner beinhaltend ein Endoskop, das dazu angepasst ist, in dem Triebwerk benachbart zu der Reihe von Turbinenschaufeln lokalisiert zu sein, um das Bild der Turbinenschaufel der Reihe von Turbinenschaufeln zu erhalten, wobei das computerlesbare Medium funktionell mit dem Endoskop verbindbar ist, um von diesem das Bild der Turbinenschaufel zu empfangen.

13. System nach einem der Ansprüche 9 bis 12, wobei das Endoskop dazu angepasst ist, ein Video der Turbinenschaufel zu erhalten, während sich die Reihe von Turbinenschaufeln dreht, wobei das Bild ein aus dem Video extrahiertes Standbild ist.

## Revendications

1. Procédé de surveillance du fluage de pale de turbine dans un moteur à turbine à gaz, le procédé comprenant :
la réception d'une image d'une pale de turbine d'une rangée de pales de turbine, l'image ayant été obtenue à l'aide d'un endoscope situé dans le moteur adjacent à une rangée de pales de turbine ;
la mesure sur l'image d'une distance (D) entre des repères radialement internes et radialement externes (36, 38) sur la pale de turbine ; et
la comparaison de la distance mesurée à une distance de référence pour déterminer une quantité d'allongement induit par fluage de la pale, **caractérisé en ce que** les repères sont respectivement sur une
plate-forme et une enveloppe de la pale de turbine, et chaque point de repère étant un coin de la plate-forme ou de l'enveloppe respective le plus proche du bord de fuite (34) de la pale.

2. Procédé selon la revendication 1, ladite mesure sur l'image de la distance entre des repères radialement internes et radialement externes sur la pale de turbine comprenant : l'identification sur l'image d'une caractéristique (40) de la pale de turbine comportant une taille connue ; la détermination d'une échelle de conversion de distance à l'aide de la taille connue de la caractéristique identifiée (40) ; et
l'utilisation de l'échelle de conversion pour déterminer la distance entre les repères radialement internes et radialement externes.

3. Procédé selon la revendication 1 ou 2, ladite distance de référence étant la distance nominale entre les repères radialement internes et radialement externes pour une pale de turbine qui n'a pas subi de fluage.

4. Procédé selon l'une quelconque des revendications précédentes, ladite mesure comprenant la réalisation d'une analyse d'image automatisée pour extraire les lignes de bord (30, 32, 34) de la pale de turbine à partir de l'image.

5. Procédé selon l'une quelconque des revendications précédentes, ladite réception, ladite mesure et ladite comparaison étant réalisées pour chacune des pales de turbine successives de la rangée de pales de turbine.

6. Procédé selon l'une quelconque des revendications précédentes, comprenant en outre :
l'étalonnage de l'endoscope pour déterminer des distorsions d'imagerie produites par celui-ci ; et
l'utilisation de l'étalonnage pour régler l'image afin de supprimer ou de réduire les distorsions d'imagerie avant la mesure sur l'image de la distance entre des repères radialement internes et radialement externes sur la pale de turbine.

7. Procédé selon l'une quelconque des revendications précédentes, comprenant en outre, préalablement à la réception de l'image d'une pale de turbine :
le placement de l'endoscope dans le moteur à proximité de la rangée de pales de turbine ;
et l'utilisation de l'endoscope pour obtenir l'image de la pale de turbine de la rangée de pales de turbine.

8. Procédé selon l'une quelconque des revendications précédentes, ledit endoscope étant utilisé pour obtenir une vidéo de la pale de turbine tandis que la rangée de pales de turbine tourne, l'image étant une image fixe extraite de la vidéo.

9. Système destiné à la surveillance du fluage de pale de turbine dans un moteur à turbine à gaz, le système comprenant :
un support lisible par ordinateur destiné à stocker une image d'une pale de turbine d'une rangée de pales de turbine, l'image ayant été obtenue à l'aide d'un endoscope situé dans le moteur à proximité de la rangée de pales de turbine ; et
un sous-système basé sur un processeur connecté fonctionnellement au support lisible par ordinateur et adapté pour :
réaliser une analyse d'image automatisée pour mesurer une distance (D) entre des repères radialement internes et radialement externes (36, 38) sur la pale ; et
comparer la distance mesurée avec une distance de référence pour déterminer une quantité d'allongement induit par fluage de la pale, **caractérisé en ce que** les repères sont respectivement sur une plate-forme et une enveloppe de la pale de turbine, et chaque repère étant un coin de la plate-forme ou de l'enveloppe respective le plus proche du bord de fuite (34) de la pale.

10. Système selon la revendication 9, ladite mesure sur l'image de la distance entre des repères radialement internes et radialement externes sur la pale de turbine réalisée par l'analyse d'image automatisée comprenant :
l'identification sur l'image d'une caractéristique (40) de la pale de turbine qui comporte une taille connue ;
la détermination d'une échelle de conversion de distance à l'aide de la taille connue de la caractéristique identifiée (40) ; et
l'utilisation de l'échelle de conversion pour déterminer la distance entre les repères radialement internes et radialement externes.

11. Système selon la revendication 9 ou 10, ledit sous-système basé sur un processeur étant en outre adapté pour extraire les lignes de bord (30, 32, 34) de la pale de turbine de l'image en tant que précurseur pour la mesure de la distance entre les repères radialement internes et radialement externes.

12. Système selon l'une quelconque des revendications 9 à 11, comprenant en outre un endoscope adapté pour être situé dans le moteur à proximité de la rangée de pales de turbine en vue de l'obtention de l'image de la pale de turbine de la rangée de pales de turbine, le support lisible par ordinateur étant fonctionnellement connectable à l'endoscope pour recevoir de celui-ci l'image de la pale de turbine.

13. Système selon l'une quelconque des revendications 9 à 12, ledit endoscope étant adapté pour obtenir une vidéo de la pale de turbine tandis que la rangée de pales de turbine tourne, l'image étant une image fixe extraite de la vidéo.
